# EUROPÄISCHE PATENTANMELDUNG

(11) **EP 1 122 563 A1**
(43) Veröffentlichungstag der Anmeldung: **08.08.2001**
(21) Anmeldenummer: 01101086.5
(22) Anmeldetag: 18.01.2001
(51) Int. Cl.: G02B 6/38

(54) **Steckverbinder**

(30) Priorität: 03.02.2000 DE 10004603
(71) Anmelder: Delphi Technologies, Inc., Troy, MI 48007 (US)
(72) Erfinder: Halbach, Paul Gerhard, 42369 Wuppertal (DE); Herlitz, Martin, 42897 Remscheid (DE); Schekalla, Peter, 42329 Wuppertal (DE); Uc, Kamil, 42115 Wuppertal (DE)
(74) Vertreter: Manitz, Finsterwald & Partner Gbr

(57) **Zusammenfassung**

Ein Steckverbinder (10) umfaßt zwei zusammensteckbare Verbinderteile (12,14), die jeweils mit wenigstens einer optischen Ferrule (16,18) versehen sind, die bei zusammengesteckten Verbinderteilen (12,14) einer dem anderen Verbinderteil (12,14) zugeordneten optischen Ferrule (18,16) gegenüberliegt, um eine jeweilige Lichtleiterverbindung herzustellen. Die den beiden Verbinderteilen (12,14) zugeordneten optischen Ferrulen (16,18) sind jeweils in einem Gehäusemodul (24,26) untergebracht, das bei zusammengesteckten Verbinderteilen (14,12) einem dem anderen Verbinderteil (14,12) zugeordneten Gehäusemodul (26,24) gegenüberliegt. Dabei ist eines (24) der beiden Gehäusemodule (24,26) mit einem optischen Adapter (28) versehen, über den die beiden einander gegenüberliegenden Ferrulen (16,18) miteinander verriegelbar sind. Der Adapter (28) ist in Steck- oder Axialrichtung (X) relativ zum betreffenden Gehäusemodul (26) verschiebbar und federnd in eine Vormontagestellung belastet. Beim Zusammenstecken der beiden Verbinderteile (12,14) ist der Adapter (28) zusammen mit den mit ihm verrasteten und entsprechend an ihm fixierten Ferrulen (16,18) entgegen der Federkraft in eine Betriebsstellung bewegbar.

## Beschreibung

Die Erfindung betrifft einen Steckverbinder mit zwei zusammensteckbaren Verbinderteilen, die jeweils mit wenigstens einer optischen Ferrule, d.h. einem optischen Terminal, versehen sind, die bei zusammengesteckten Verbinderteilen einer dem anderen Verbinderteil zugeordneten optischen Ferrule, gegenüberliegt, um eine jeweilige Lichtleiterverbindung herzustellen.

Die Funktionsfähigkeit von Lichtleiter-Steckverbindern der eingangs genannten Art ist von der gegenseitigen Ausrichtung der optischen Komponenten abhängig. Eine fehlerhafte Ausrichtung dieser Komponenten kann zu größeren Lichtverlusten führen und demzufolge die Funktionsfähigkeit des gesamten Lichtleitersystems beeinträchtigen. Während die radialen Toleranzen in der Regel eingehalten werden können, ist die Einhaltung der axialen Toleranzen, d.h. der axialen Abstände zwischen den beiden optischen Komponenten, relativ schwierig.

Ziel der Erfindung ist es, einen Steckverbinder der eingangs genannten Art zu schaffen, bei dem der sich bezüglich der optischen Funktion ergebende Toleranzbereich auf einfache und zuverlässige Weise möglichst klein gehalten ist. Dabei soll insbesondere der sich in Axialrichtung ergebende Toleranzbereich so klein wie möglich gehalten werden.

Diese Aufgabe wird nach der Erfindung dadurch gelöst, daß die den beiden Verbinderteilen zugeordneten optischen Ferrulen jeweils in einem Gehäusemodul untergebracht sind, das bei zusammengesteckten Verbinderteilen einer dem anderen Verbinderteil zugeordneten Gehäusemodul gegenüberliegt, daß eines der beiden Gehäusemodule mit einem optischen Adapter versehen ist, über den die beiden einander gegenüberliegenden Ferrulen miteinander verriegelbar sind, daß der Adapter in Steck- oder Axialrichtung relativ zum betreffenden Gehäusemodul verschiebbar und federnd in eine Vormontagestellung belastet ist und daß der Adapter beim Zusammenstecken der beiden Verbinderteile zusammen mit den mit ihm verrasteten und entsprechend an ihm fixierten Ferrulen entgegen der Federkraft in eine Betriebsstellung bewegbar ist. Dabei soll der Adapter zusammen mit mit ihm verriegelten Ferrulen entlang einer Wegstrecke entgegen der Federkraft zurückbewegbar sein, die größer ist als die axialen Toleranzen des Steckverbinders.

Aufgrund dieser Ausbildung wird der sich bezüglich der optischen Funktion ergebende Toleranzbereich auf ein Minimum reduziert, so daß nach einem jeweiligen Zusammenstecken der Verbinderteile stets eine optimale Funktion gewährleistet ist. Insbesondere der sich bezüglich der optischen Funktion in Axialrichtung ergebende Toleranzbereich wird deutlich verringert. Nachdem die Ferrulen unabhängig von der Verriegelung der beiden Verbinderteile über den schieberartigen Adapter miteinander verriegelbar und entsprechend fixierbar sind, sind auch die axialen Toleranzen unabhängig von der Verriegelung der beiden Verbinderteile. Die beiden optischen Ferrulen können somit sehr genau relativ zueinander positioniert werden. Die Erfindung ist insbesondere bei für den Kraftfahrzeugbereich bestimmten Verbindern anwendbar.

Bei einer bevorzugten Ausführungsform des erfindungsgemäßen Steckverbinders erfolgt die Verriegelung der Ferrulen mit dem Adapter im Verlauf des Zusammensteckens der beiden Verbinderteile zeitlich vor einer gegenseitigen Verriegelung der beiden Verbinderteile.

Die gegenseitige Ausrichtung der Ferrulen erfolgt zweckmäßigerweise über die Gehäusemodule.

Bei einer bevorzugten praktischen Ausführungsform umfaßt der Adapter wenigstens zwei einander gegenüberliegende federnde Verriegelungselemente, die mit einer an einer jeweiligen Ferrule vorgesehenen Verriegelungsfläche in Eingriff bringbar sind. Die federnden Verriegelungselemente können beispielsweise durch federnde Verriegelungsarme gebildet sein. Die Verriegelungsfläche ist vorzugsweise durch eine an der Ferrule vorgesehene Nut gebildet, bei der es sich beispielsweise um eine Umfangsnut handeln kann.

Die über den Adapter erfolgende Verriegelung der Ferrulen wird vorzugsweise auch bei eine jeweilige Betriebsstellung einnehmendem Adapter aufrechterhalten.

Von Vorteil ist auch, wenn die federnden Verriegelungselemente zumindest bei zusammengeführten Verbinderteilen und entsprechend zusammengesteckten Gehäusemodulen durch Zweitverriegelungsmittel mit der Verriegelungsfläche in Eingriff gehalten sind.

Bei einer zweckmäßigen praktischen Ausführungsform ist die im den Adapter aufweisenden Gehäusemodul untergebrachte Ferrule durch federnde Verriegelungselemente mit dem Adapter verriegelt und diese Verriegelung bei in das betreffende Verbinderteil eingesetztem Gehäusemodul durch Zweitverriegelungsmittel gesichert. Dabei können die Verriegelungselemente beispielsweise durch die Innenwand des Verbinderteils mit der Verriegelungsfläche in Eingriff gehalten werden.

Bei einer bevorzugten praktischen Ausführungsform sind die Gehäusemodule jeweils mit dem betreffenden Verbinderteil verriegelbar.

Der Adapter ist zweckmäßigerweise durch wenigstens ein in dem betreffenden Gehäusemodul untergebrachtes Federelement in die Vormontagestellung belastet. Als Federelement kann beispielsweise eine am Gehäusemodul abgestützte Druckfeder vorgesehen sein.

Der Adapter umfaßt vorteilhafterweise wenigstens einen Ausrichtabschnitt, der eine durchgehende axiale Ausrichtöffnung besitzt, in die axiale Ansätze der Ferrulen einsteckbar sind, und an seinen beiden Enden Stirnflächen aufweist, die mit an den Ferrulen vorgesehenen Anschlagflächen zusammenwirken und an denen die mit dem Adapter verrieglten Ferrulen anliegen.

In einem jeweiligen Gehäusemodul können jeweils ein oder auch mehrere Ferrulen untergebracht sein. So sind beispielsweise auch Gehäusemodule mit jeweils zwei Ferrulen denkbar.
Der Adapter kann für ein oder auch mehrere Ferrulepaare vorgesehen sein. So ist beispielsweise auch die Verwendung eines gemeinsamen Adapters für insbesondere zwei Ferrulepaare denkbar.

Die beiden Gehäusemodule sind vorzugsweise miteinander verriegelbar.

Die Erfindung wird im folgenden anhand eines Ausführungsbeispiels unter Bezugnahme auf die Zeichnung näher erläutert; in dieser zeigen:
- Figur 1: eine schematische, perspektivische Ansicht zweier zusammengeführter, jeweils zwei Ferrulen aufnehmender Gehäusemodule, die in die beiden Verbinderteile eines Steckverbinders einsetzbar sind,
- Figur 2: die in das jeweilige Verbinderteil des Steckverbinders eingesetzten Gehäusemodule,
- Figur 3: einen Horizontalschnitt durch die beiden zusammengeführten Gehäusemodule,
- Figur 4: einen Vertikalschnitt durch die beiden zusammengeführten Gehäusemodule,
- Figur 5: eine schematische, teilweise geschnittene Draufsicht der beiden Gehäusemodule vor dem Zusammenstecken der beiden Verbinderteile,
- Figur 6: eine schematische, teilweise geschnittene Draufsicht der beiden Gehäusemodule, wobei die beiden Verbinderteile bereits so weit zusammengesteckt sind, daß die Ferrulen über den Adapter miteinander verriegelt sind, und
- Figur 7: eine schematische, teilweise geschnittene Draufsicht der beiden Gehäusemodule, wobei die beiden Verbinderteile vollständig zusammengesteckt und die beiden Gehäusemodule zusammengeführt sind.

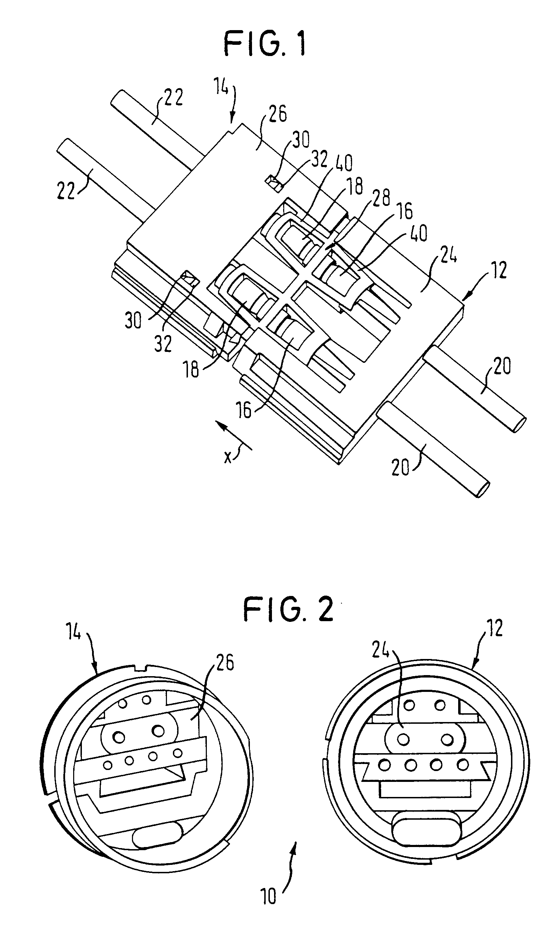

Der in den Figuren 1 bis 7 gezeigte Steckverbinder 10 umfaßt zwei zusammensteckbare Verbinderteile 12, 14 (siehe insbesondere Figur 2), die jeweils mit zwei optischen Ferrulen 16 bzw. 18 versehen sind. Jede dieser Ferrulen 16, 18 ist jeweils mit einem Lichtleiter 20 bzw. 22 verbunden.

Die den beiden Verbinderteilen 12, 14 zugeordneten optischen Ferrulen 16, 18 sind jeweils in einem Gehäusemodul 24 bzw. 26 untergebracht, das bei zusammengesteckten Verbinderteilen 12, 14 dem dem anderen Verbinderteil 14 bzw. 12 zugeordneten Gehäusemodul 26 bzw. 24 gegenüberliegt.

Das Gehäusemodul 24 ist mit einem optischen Adapter 28 versehen, über den die einander jeweils gegenüberliegenden Ferrulen 16, 18 miteinander verriegelbar sind.

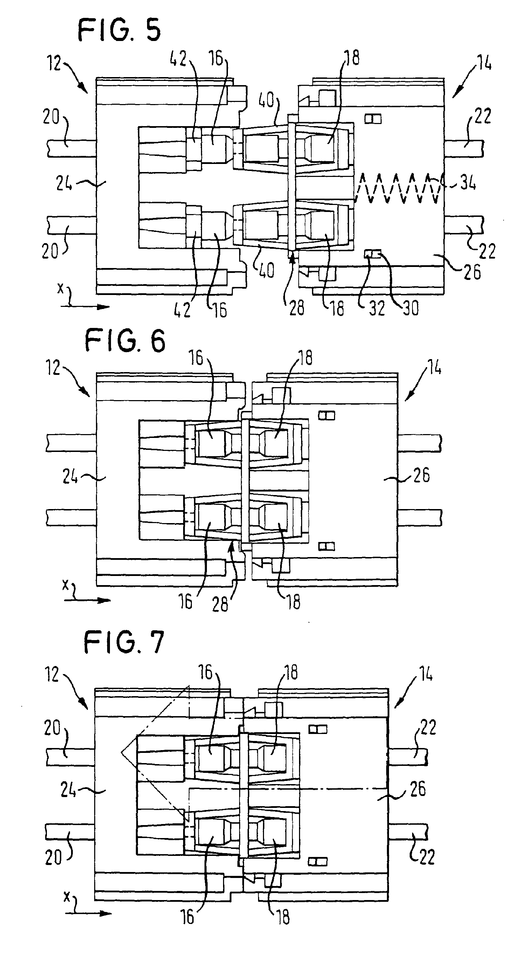

Der Adapter 28 ist in Steck- oder Axialrichtung x relativ zum Gehäusemodul 26 verschiebbar und federnd in eine beispielsweise aus der Figur 5 ersichtliche Vormontagestellung belastet. Beim Zusammenstecken der beiden Verbinderteile 12, 14 ist der Adapter 28 zusammen mit den mit ihm verrasteten und entsprechend an ihm fixierten Ferrulen 16, 18 entgegen der Federkraft in eine aus den Figuren 1, 3, 4 und 7 ersichtliche Betriebsstellung bewegbar. Dabei ist der Adapter 28 zusammen mit den mit ihm verriegelten Ferrulen 16, 18 entlang einer Wegstrecke entgegen der Federkraft zurück bewegbar, die größer ist als die axialen Toleranzen des Steckverbinders 10.

Wie insbesondere anhand der Figur 1 zu erkennen ist, kann der maximal zulässige Verschiebeweg des Adapters 28 durch im Gehäusemodul 26 vorgesehene Schlitze 30 begrenzt sein, in die dem Adapter 28 zugeordnete Vorsprünge 32 eingreifen.

Die aus dem Adapter 28 und den mit diesem verriegelten Ferrulen 16, 18 bestehende optische Einheit ist somit über eine bestimmte Wegstrecke relativ zum Verbinder 10 bewegbar.

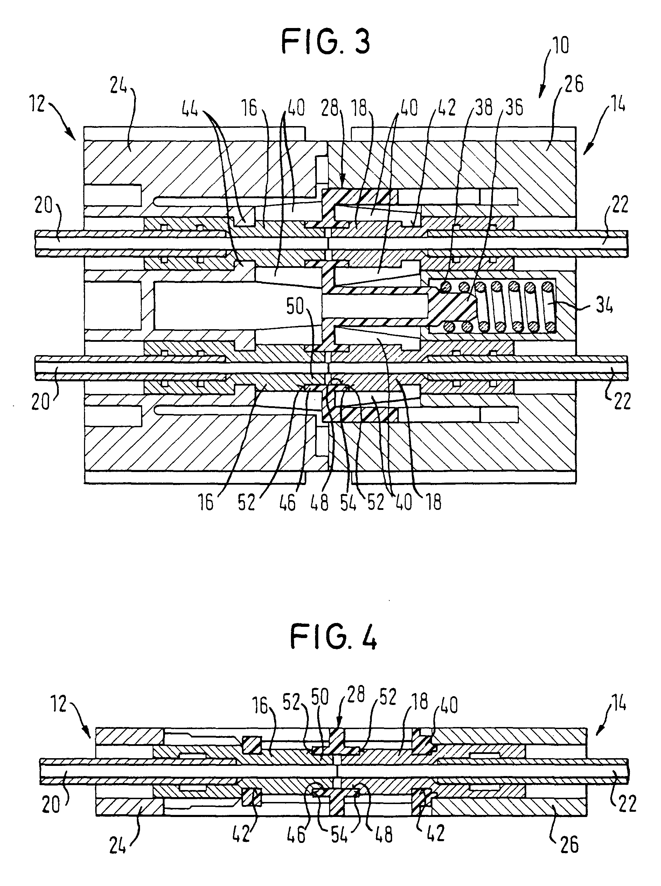

Der Adapter 28 ist durch wenigstens ein in dem Gehäusemodul 26 untergebrachtes Federelement, hier eine Druckfeder 34 (vgl. insbesondere die Figuren 3 und 5), in die Vormontagestellung belastet. Diese am Gehäusemodul 26 abgestützte Druckfeder 34 ist mit ihrem anderen Ende auf einen axialen Ansatz 36 des Adapters 28 aufgeschoben, der eine mit der Druckfeder 34 zusammenwirkende Anschlagsfläche 38 aufweist (vgl. insbesondere Figur 3).

Im vorliegenden Fall ist für zwei Ferrulepaare 16, 18 ein gemeinsamer Adapter 28 vorgesehen.

Die Verriegelung der Ferrulen 16, 18 mit dem Adapter 28 erfolgt im Verlauf des Zusammensteckens der beiden Verbinderteile 12, 14 zeitlich vor einer gegenseitigen Verriegelung der beiden Verbinderteile 12, 14.

Der Adapter 28 umfaßt wenigstens zwei einander gegenüberliegende federnde Verriegelungselemente, hier federnde Verriegelungsarme 40, die mit einer an einer jeweiligen Ferrule 16, 18 vorgesehenen Verriegelungsfläche 42 in Eingriff bringbar sind (vgl. insbesondere die Figuren 1 und 3 bis 5). Die Verriegelungsfläche 42 ist durch eine an der jeweiligen Ferrule 16, 18 vorgesehene Nut gebildet, bei der es sich beispielsweise um eine Umfangsnut handeln kann.

Die über den Adapter 28 erfolgende Verriegelung der Ferrule 16, 18 wird auch bei eine jeweilige Betriebsstellung einnehmendem Adapter 28 noch aufrechterhalten.

Zumindest bei zusammengesteckten Verbinderteilen 12, 14 und entsprechend zusammengeführten Gehäusemodulen 24, 26 können die federnden Verriegelungsarme 40 durch Zweitverriegelungsmittel mit der Verriegelungsfläche 42 in Eingriff gehalten sein. Im vorliegenden Fall ist die Verriegelung der in dem Gehäusemodul 26 untergebrachten Ferrulen 18 bei in das betreffende Verbinderteil 14 eingesetztem Gehäusemodul 26 durch Zweitverriegelungsmittel gesichert. Dabei können die betreffenden Verriegelungsarme 40 insbesondere durch die Innenwand des Verbinderteils 14 mit der an der jeweiligen Ferrule 18 vorgesehenen Verriegelungsfläche 42 in Eingriff gehalten sein.

Während die Ferrulen 18 entgegen der Kraft der Druckfeder 34 relativ zum Gehäusemodul 26 verschiebbar sind, sind die Ferrulen 16 mit dem Gehäusemodul 24 verrastet, das hierzu mit entsprechenden federnden Rastarmen 44 versehen ist (vgl. insbesondere die Figuren 3 und 4).

Die Gehäusemodule 24, 26 können jeweils mit dem betreffenden Verbinderteil 12 bzw. 14 verriegelbar sein.

Die gegenseitige Ausrichtung der Ferrulen 16, 18 erfolgt über die Gehäusemodule 24, 26.

Im vorliegenden Fall umfaßt der Adapter 28 für jedes der beiden Ferrulepaare 16, 18 jeweils einen Ausrichtabschnitt 46, der eine durchgehende axiale Ausrichtöffnung 48 besitzt, in die axiale Ansätze 50 der Ferrulen 16, 18 einsteckbar sind. An seinen beiden axialen Enden weist der jeweilige Ausrichtabschnitt 46 Stirnflächen 52 auf, die mit an den Ferrulen 16, 18 vorgesehenen Anschlagflächen 54 zusammenwirken und an denen die mit dem Adapter 28 verriegelten Ferrulen 16, 18 anliegen (vgl. insbesondere Figuren 3 und 4).

In der Darstellung gemäß Figur 1 sind die beiden Gehäusemodule 24, 26 zusammengeführt. In diesem Fall nimmt die aus dem Adapter 28 und den mit diesem verriegelten Ferrulen 16, 18 bestehende optische Einheit eine zurückgezogene Betriebsstellung an.

Figur 2 zeigt die in das jeweilige Verbinderteil 12, 14 eingesetzten Gehäusemodule 24 bzw. 26.

Dabei ist beispielsweise ein 40-Wege-Türverbinder denkbar.

Figur 3 zeigt einen Horizontalschnitt und Figur 4 einen Vertikalschnitt der zusammengeführten Gehäusemodule 24, 26. Entsprechend nimmt auch hier die den Adapter 28 sowie die mit diesem verriegelten Ferrulen 16, 18 umfassende optische Einheit eine zurückgezogene, hier nach rechts verlagerte Betriebsstellung ein.

Figur 5 zeigt eine schematische, teilweise geschnittene Draufsicht der beiden Gehäusemodule 24, 26 vor dem Zusammenstecken der beiden Verbinderteile 12, 14. In diesem Fall ist der Adapter 28 durch die Druckfeder 34 in seine linke Vormontagestellung belastet, in der die Vorsprünge 32 am linken Rand der Schlitze 30 anliegen. Die im Gehäusemodul 24 untergebrachten Ferrulen 16 sind noch nicht mit dem Adapter 28 verrastet.

Figur 6 zeigt eine schematische, teilweise geschnittene Darstellung der beiden Gehäusemodule 24, 26, wobei die beiden Verbinderteile 12, 14 bereits so weit zusammengesteckt sind, daß auch die Ferrulen 16 mit dem Adapter 28 verrastet sind. Die Verriegelung der Ferrulen 16, 18 mit dem Adapter 28 erfolgt somit seitlich vor einer gegenseitigen Verriegelung der beiden Verbinderteile 12, 14.

Figur 7 zeigt eine schematische, teilweise geschnittene Draufsicht der beiden Gehäusemodule 24, 26, wobei die beiden Verbinderteile 12, 14 vollständig zusammengesteckt und die beiden Gehäusemodule 24, 26 zusammengeführt sind bzw. mit ihren einander zugewandten Stirnflächen aneinandergrenzen. In diesem Fall nimmt die den Adapter 28 und die mit diesem verrasteten Ferrulen 16, 18 umfassende optische Einheit eine zurückgezogene Betriebsstellung ein, in die sie beim Zusammenstecken der beiden Verbinderteile 12, 14 entgegen der Kraft der Druckfeder 34 bewegt wurde.

### Bezugszeichenliste

- 10: Steckverbinder
- 12: Verbinderteil
- 14: Verbinderteil
- 16: Ferrule
- 18: Ferrule
- 20: Lichtleiter
- 22: Lichtleiter
- 24: Gehäusemodul
- 26: Gehäusemodul
- 28: optischer Adapter
- 30: Schlitz
- 32: Vorsprung
- 34: Druckfeder
- 36: axialer Ansatz
- 38: Anschlagsfläche
- 40: Verriegelungsarm
- 42: Verriegelungsfläche
- 44: Rastarm
- 46: Ausrichtabschnitt
- 48: axiale Ausrichtöffnung
- 50: axialer Ansatz
- 52: Stirnfläche
- 54: Anschlagfläche

- x: Steck- oder Axialrichtung

## Patentansprüche

1. Steckverbinder (10) mit zwei zusammensteckbaren Verbinderteilen (12, 14), die jeweils mit wenigstens einer optischen Ferrule (16, 18) versehen sind, die bei zusammengesteckten Verbinderteilen (12, 14) einer dem anderen Verbinderteil (14, 12) zugeordneten optischen Ferrule (18, 16) gegenüberliegt, um eine jeweilige Lichtleiterverbindung herzustellen,
dadurch **gekennzeichnet**,
daß die den beiden Verbinderteilen (12, 14) zugeordneten optischen Ferrulen (16, 18) jeweils in einem Gehäusemodul (24, 26) untergebracht sind, das bei zusammengesteckten Verbinderteilen (12, 14) einem dem anderen Verbinderteil (14, 12) zugeordneten Gehäusemodul (26, 24) gegenüberliegt, daß eines (24) der beiden Gehäusemodule (24, 26) mit einem optischen Adapter (28) versehen ist, über den die beiden einander gegenüberliegenden Ferrulen (16, 18) miteinander verriegelbar sind, daß der Adapter (28) in Steck- oder Axialrichtung (x) relativ zum betreffenden Gehäusemodul (26) verschiebbar und federnd in eine Vormontagestellung belastet ist und daß der Adapter (28) beim Zusammenstecken der beiden Verbinderteile (12, 14) zusammen mit den mit ihm verrasteten und entsprechend an ihm fixierten Ferrulen (16, 18) entgegen der Federkraft in eine Betriebsstellung bewegbar ist.

2. Steckverbinder nach Anspruch 1,
dadurch **gekenn*z*eichnet**,
daß die Verriegelung der Ferrulen (16, 18) mit dem Adapter (28) im Verlauf des Zusammensteckens der beiden Verbinderteile zeitlich vor einer gegenseitigen Verriegelung der beiden Verbinderteile (12, 14) erfolgt.

3. Steckverbinder nach Anspruch 1 oder 2,
dadurch **gekennzeichnet**,
daß die gegenseitige Ausrichtung der Ferrulen (16, 18) über die Gehäusemodule (24, 26) erfolgt.

4. Steckverbinder nach einem der vorhergehenden Ansprüche,
dadurch **gekennzeichnet**,
daß der Adapter (28) wenigstens zwei einander gegenüberliegende federnde Verriegelungselemente (40) umfaßt, die mit einer an einer jeweiligen Ferrule (16, 18) vorgesehenen Verriegelungsfläche (42) in Eingriff bringbar sind.

5. Steckverbinder nach Anspruch 4,
dadurch **gekennzeichnet**,
daß die federnden Verriegelungselemente jeweils durch einen federnden Verriegelungsarm (40) gebildet sind.

6. Steckverbinder nach Anspruch 4 oder 5,
dadurch **gekennzeichnet**,
daß die Verriegelungsfläche (42) durch eine an der Ferrule (16, 18) vorgesehene Nut gebildet ist.

7. Steckverbinder nach Anspruch 6,
dadurch **gekennzeichnet**,
daß die Nut (42) durch eine Umfangsnut gebildet ist.

8. Steckverbinder nach einem der vorhergehenden Ansprüche,
dadurch **gekennzeichnet**,
.daß die über den Adapter (28) erfolgende Verriegelung der Ferrulen (16, 18) auch bei seine Betriebsstellung einnehmendem Adapter (28) aufrechterhalten ist.

9. Steckverbinder nach einem der vorhergehenden Ansprüche,
dadurch **gekennzeichnet,**
daß die federnden Verriegelungselemente (40) zumindest bei zusammengesteckten Verbinderteilen (12, 14) und entsprechend zusammengeführten Gehäusemodulen (24, 26) durch Zweitverriegelungsmittel mit der Verriegelungsfläche (42) in Eingriff gehalten sind.

10. Steckverbinder nach einem der vorhergehenden Ansprüche,
dadurch **gekennzeichnet**,
daß die im den Adapter (28) aufweisenden Gehäusemodul (26) untergebrachte Ferrule (18) durch federnde Verriegelungselemente (40) mit dem Adapter (28) verriegelt und diese Verriegelung bei in das betreffende Verbinderteil (14) eingesetztem Gehäusemodul (26) durch Zweitverriegelungsmittel gesichert ist.

11. Steckverbinder nach Anspruch 10,
dadurch **gekennzeichnet**,
daß die Verriegelungselemente (40) bei in das betreffende Verbinderteil (14) eingesetztem Gehäusemodul (26) durch die Innenwand des Verbinderteils (14) mit der an der Ferrule (18) vorgesehenen Verriegelungsfläche (42) in Eingriff gehalten sind.

12. Steckverbinder nach einem der vorhergehenden Ansprüche,
dadurch **gekennzeichnet,**
daß die Gehäusemodule (24, 26) jeweils mit dem betreffenden Verbinderteil (12, 14) verriegelbar sind.

13. Steckverbinder nach einem der vorhergehenden Ansprüche,
dadurch **gekennzeichnet**,
daß der Adapter (28) durch wenigstens ein in dem betreffenden Gehäusemodul (26) untergebrachtes Federelement (34) in die Vormontagestellung belastet ist.

14. Steckverbinder nach einem der vorhergehenden Ansprüche,
dadurch **gekennzeichnet**,
daß das Federelement eine am Gehäusemodul (26) abgestützte Druckfeder (34) umfaßt.

15. Steckverbinder nach einem der vorhergehenden Ansprüche,
dadurch **gekennzeichnet,**
daß der Adapter (28) wenigstens einen Ausrichtabschnitt (46) umfaßt, der eine durchgehende axiale Ausrichtöffnung (48) besitzt, in die axiale Ansätze (50) der Ferrulen (16, 18) einsteckbar sind, und an seinen beiden Enden Stirnflächen (52) aufweist, die mit an den Ferrulen (16, 18) vorgesehenen Anschlagflächen (54) zusammenwirken und an denen die mit dem Adapter (28) verriegelten Ferrulen (16, 18) anliegen.

16. Steckverbinder nach einem der vorhergehenden Ansprüche,
dadurch **gekennzeichnet,**
daß in einem jeweiligen Gehäusemodul (24, 26) jeweils wenigstens ein Ferrule (16, 18) untergebracht ist.

17. Steckverbinder nach einem der vorhergehenden Ansprüche,
dadurch **gekennzeichnet**,
daß in einem jeweiligen Gehäusemodul (24, 26) jeweils wenigstens zwei Ferrulen (16, 18) untergebracht sind.

18. Steckverbinder nach einem der vorhergehenden Ansprüche,
dadurch **gekennzeichnet**,
daß der Adapter (28) für wenigstens ein Ferrulepaar (16, 18) vorgesehen ist.

19. Steckverbinder nach einem der vorhergehenden Ansprüche,
dadurch **gekennzeichnet**,
daß für wenigstens zwei Ferrulepaare (16, 18) ein gemeinsamer Adapter (28) vorgesehen ist.
